# EUROPÄISCHE PATENTSCHRIFT

(11) **EP 2 605 929 B1**
(45) Veröffentlichungstag und Bekanntmachung des Hinweises auf die Patenterteilung: **06.12.2017**
(21) Anmeldenummer: 11761274.7
(22) Anmeldetag: 12.08.2011
(51) Int. Cl.: B60W 50/00, B60L 11/12, B60L 11/18, B60W 10/06, B60W 10/08, B60W 10/30, B60K 6/46, B60W 20/00

(54) **VERFAHREN ZUM BETRIEB EINES ELEKTROFAHRZEUGS**
METHOD FOR OPERATING AN ELECTRIC VEHICLE
PROCÉDÉ POUR FAIRE FONCTIONNER UN VÉHICULE ÉLECTRIQUE

(30) Priorität: 16.08.2010 DE 102010034444
(43) Veröffentlichungstag der Anmeldung: 26.06.2013
(73) Patentinhaber: AVL List GmbH, 8020 Graz (AT)
(72) Erfinder: FISCHER, Robert, A-8010 Graz (AT)
(74) Vertreter: Krauns, Christian
(86) Internationale Anmeldenummer: PCT/EP2011/004070
(87) Internationale Veröffentlichungsnummer: WO 2012/022454

(56) Entgegenhaltungen:
- AT-A2- 506 272
- DE-A1- 10 162 522
- DE-A1- 10 347 684
- US-A1- 2007 227 792
- US-A1- 2009 115 358

## Beschreibung

Der Entwicklung von straßengebundenen Fahrzeugen mit reinem Elektroantrieb oder gemischten Antrieben mit Elektromotor und Verbrennungskraftmaschine wird derzeit weltweit große Aufmerksamkeit zuteil. Bei diesen Fahrzeugen kommt der Nutzung des elektrischen Energiespeichers, nach heutigem Stand der Technik ist dies meist ein Lithium-Ionen-Akkumulator, größte Bedeutung zu. Elektrische Energiespeichereinrichtungen weisen im Allgemeinen trotz des Einsatzes von Hightech-Werkstoffen ein hohes Gewicht, bezogen auf die darin speicherbare Energie, auf. Die effiziente Nutzung und damit die optimale Dimensionierung der elektrischen Energiespeichereinrichtung ist deshalb eine wesentliche Forderung bei der Entwicklung verbrauchs- und schadstoffarmer Fahrzeuge mit Elektroantrieb.
Aus dem Stand der Technik sind Hybridfahrzeuge bekannt, bei welchen die elektrische Energiespeichereinrichtung in einem vorgegebenen Ladezustandsbereich oder vorzugsweise in einem optimalen Betriebspunkt betrieben wird. Aus dem gattungsbildenden Dokument AT 506 272 A2 ist ein Verfahren zum Betrieb eines Elektrofahrzeug mit Range-Extender bekannt. Aus der US 2009/0015202 A1 ist es bekannt, für den Ladezustand einer elektrischen Energiespeichereinrichtung eine Untergrenze, eine Obergrenze sowie einen zwischen diesen beiden liegenden Sollwert zu definieren. Dabei sind die Unter- beziehungsweise Obergrenze so gewählt, dass die elektrische Energiespeichereinrichtung vor Beschädigungen geschützt wird. Die Aufladung der elektrischen Energiespeichereinrichtung durch den Verbrennungsmotor in Verbindung mit einem Generator wird beim Erreichen der Untergrenze des Ladezustands gestartet, beziehungsweise wird bei einem nennenswerten Unterschreiten des Sollwerts für den Ladezustand vom Verbrennungsmotor Leistung zum Generator abgezweigt und die Batterieladung bis zum Erreichen des Sollwertes erhöht. Aus dem Stand der Technik ist somit bekannt, den Ladezustand durch einen verbrennungsmotorisch betriebenen Generator im Wesentlichen im Bereich eines Sollwerts zu halten und so die elektrische Energiespeichereinrichtung effizient zu nutzen.

Mit der Entwicklung von Fahrzeugkonzepten, bei welchen der Fahrzeugantrieb einen, bezüglich seiner Leistung großen Elektromotor und einen kleineren Verbrennungsmotor mit Generator aufweist, ergeben sich weitere technische Probleme. Diese neuen Fahrzeuge werden nachfolgend als Elektrofahrzeug mit Range-Extender bezeichnet. Bei diesen Fahrzeugen steht insbesondere das Ziel einer großen emissionsfrei erlangter Reichweite im Vordergrund. Um insbesondere das Fahrzeuggewicht gering zu halten, wird bei Elektrofahrzeugen mit Range-Extender der elektrische Antriebsmotor mit einem Verbrennungsmotor mit elektromechanischem Energiewandler als eine Art Notstromaggregat kombiniert. Durch diesen kleinen Verbrennungsmotor ergibt sich aber insbesondere das Problem, dass der Ladezustand der elektrischen Energiespeichereinrichtung nicht auf einen Sollwert eingeregelt werden kann, da dessen Leistung zum kombinierten Antrieb des Fahrzeugs und zum Laden des elektrischen Energiespeichers in vielen Fällen zu gering ist. Zwangsläufig ist damit der Betrieb eines Elektrofahrzeugs mit Range-Extender über den Verbrennungsmotor als Notbetrieb mit eingeschränkten Fahrleistungen zu sehen.

Eine Aufgabe der Erfindung ist es, ein verbessertes Verfahren zum Betrieb eines Fahrzeugs mit Range-Extender vorzustellen, dabei kann ein Fahrzeug mit Range-Extender insbesondere auch als ein Fahrzeug mit seriellem Hybridantrieb aufgefasst werden. Diese Aufgabe wird durch ein Verfahren nach Anspruch 1 gelöst, zu bevorzugende Weiterbildungen dieses Verfahrens sind Gegenstand der Unteransprüche.

Ein Elektrofahrzeug mit Range-Extender, welches durch ein erfindungsgemäßes Verfahren gesteuert wird, weist wenigstens
- einen elektrischen Antriebsmotor,
- einen Stromerzeugungs-Verbrennungsmotor,
- einen elektromechanischen Energiewandler und
- eine elektrische Energiespeichereinrichtung
auf. Dabei ist der Stromerzeugungs-Verbrennungsmotor dazu vorgesehen, den elektromechanischen Energiewandler zur Erzeugung elektrischer Energie anzutreiben. Der elektrische Antriebsmotor hingegen ist dazu vorgesehen, das Elektrofahrzeug anzutreiben. Dabei ist der Antriebsstrang des Elektrofahrzeugs so ausgelegt, dass das Fahrzeug hauptsächlich vom elektrischen Antriebsmotor angetrieben wird und sich daher der Ladezustand des elektrischen Energiespeichers bei der Bewegung des Elektrofahrzeugs in der Ebene mit konstanter Reisegeschwindigkeit, im Wesentlichen stetig verringert. Mit dem erfindungsgemäßen Verfahren wird der tatsächliche Ladezustand der elektrischen Energiespeichereinrichtung detektiert. Dieser detektierte Wert wird mit einem vorgebbaren Schwellenwert für den Ladezustand verglichen, wobei dieser Schwellenwert oberhalb des unteren Grenzwertes für den Ladezustand liegt. Der Stromerzeugungs-Verbrennungsmotor wird in dem Fall, dass der tatsächliche Ladezustand diesen Schwellenwert erreicht und/oder unterschreitet, zur Erzeugung elektrischer Energie herangezogen. Durch diese Maßnahme wird die Verringerung des Ladezustandes während der Fahrt mit Reisegeschwindigkeit im Wesentlichen gestoppt oder wenigstens verlangsamt.

Unter einem elektrischen Antriebsmotor ist vorzugsweise ein elektromechanischer Energiewandler zu verstehen. Vorzugsweise ist ein elektrischer Antriebsmotor als eine Drehfeld- ,Synchron-, Transversalfluß- oder Reluktanzmaschine ausgeführt. Vorzugsweise weist ein elektrischer Antriebsmotor ein stillstehendes Gehäuse und einen durch elektrische Energie in Rotationsbewegung versetzten Rotor auf. Weiter Vorzugsweise wird der elektrische Antriebsmotor im sogenannten Vierquadranten-Betrieb betrieben. Vorzugsweise kann der elektrische Antriebsmotor sowohl motorisch (Drehzahl und Drehmoment des elektrischen Antriebsmotors weisen in die gleiche Richtung) wie auch generatorisch, (Drehzahl und Drehmoment des elektrischen Antriebsmotors weisen in entgegengesetzte Richtungen) betrieben werden.

Unter einem Stromerzeugungs-Verbrennungsmotor ist vorzugsweise eine thermische Kraftmaschine mit innerer oder äußerer Verbrennung zu verstehen. Vorzugsweise wird in einem Stromerzeugungs-Verbrennungsmotor chemisch gebundene Energie in kinetische Energie umgewandelt. Vorzugsweise ist ein Stromerzeugungs-Verbrennungsmotor als eine Gas- oder Dampfturbine, als ein Frei- oder Hubkolbenmotor und besonders bevorzugt als ein Kreiskolbenmotor ausgeführt. Vorzugsweise weist ein Stromerzeugungs-Verbrennungsmotor einen stillstehenden Gehäuseabschnitt und eine drehbar gelagerte Abtriebswelle auf.

Unter einem elektromechanischen Energiewandler ist vorzugsweise eine Einrichtung zum Erzeugen von elektrischer Energie aus kinetischer Energie zu verstehen. Vorzugsweise weist ein elektromechanischer Energiewandler einen stillstehenden Gehäuseabschnitt und eine drehbar gelagerte Eingangswelle auf. Vorzugsweise wird die in diesem elektromechanischen Energiewandler erzeugte elektrische Energie in der elektrischen Energiespeichereinrichtung gespeichert oder bevorzugt direkt zum Antrieb des Elektrofahrzeugs verwendet.

Unter einer elektrischen Energiespeichereinrichtung ist vorzugsweise eine Einrichtung zum Speichern elektrischer Energie in chemisch gebundener Form zu verstehen. Vorzugsweise ist eine elektrische Energiespeichereinrichtung als Akkumulator ausgeführt, ist also insbesondere dazu vorgesehen wiederholt auf- und wieder entladen zu werden. Vorzugsweise ist die elektrische Energiespeichereinrichtung als Lithium-Ionen-Akkumulator ausgeführt. Vorzugsweise ist die elektrische Energiespeichereinrichtung dazu vorgesehen, elektrische Energie an den elektrischen Antriebsmotor abzugeben und elektrische Energie von diesem aufzunehmen und/oder elektrische Energie von diesem elektromechanischen Energiewandler aufzunehmen.

Unter dem Antreiben des elektromechanischen Energiewandlers durch den Stromerzeugungs-Verbrennungsmotor ist vorzugsweise zu verstehen, dass kinetische Energie von der Abtriebswelle des Stromerzeugungs-Verbrennungsmotor auf die Eingangswelle des elektromechanischen Energiewandlers übertragen wird. Weiter vorzugsweise wird diese kinetische Energie im elektromechanischen Energiewandler in elektrische Energie umgewandelt.

Unter dem Antreiben des Elektrofahrzeugs durch den elektrischen Antriebsmotor ist vorzugsweise zu verstehen, dass dieser die zum Überwinden der Fahrtwiderstände notwendige Leistung zur Verfügung stellt. Unter den Fahrtwiderständen sind insbesondere der Beschleunigungs-, Steigungs-, Roll- und Luftwiderstand zu verstehen.

Unter einem unteren beziehungsweise oberen Grenzwert des Ladezustandes der elektrischen Energiespeichereinrichtung sind vorzugsweise Grenzen zu verstehen, außerhalb der die elektrische Energiespeichereinrichtung nicht betrieben wird. Vorzugsweise stellt der obere Grenzwert die Grenze dar, bis zu welcher die elektrische Energiespeichereinrichtung maximal aufgeladen wird. Physikalisch kann es insbesondere möglich sein, die elektrische Energiespeichereinrichtung noch weiter aufzuladen, durch den oberen Grenzwert und die Überwachung desselben wird dies vorzugsweise verhindert und damit die elektrische Energiespeichereinrichtung vor einer Beschädigung bewahrt. Vorzugsweise stellt der untere Grenzwert die Grenze dar, bis zu welcher die elektrische Energiespeichereinrichtung minimal entladen wird. Physikalisch kann es insbesondere möglich sein, die elektrische Energiespeichereinrichtung noch weiter zu entladen, durch den unteren Grenzwert und die Überwachung desselben wird dies vorzugsweise verhindert und damit die elektrische Energiespeichereinrichtung vor einer Beschädigung bewahrt.

Unter einem sich stetig verringernden Ladezustand der elektrischen Energiespeichereinrichtung ist vorzugsweise zu verstehen, dass der Energieinhalt der elektrischen Energiespeichereinrichtung durch das Überwinden der Fahrwiderstände aufgezehrt wird und dass sich der Energieinhalt mit fortschreitender Dauer während der Fahrt verringert. Insbesondere dadurch, dass der elektrische Antriebsmotor auch in einem generatorischen Betriebsbereich betrieben werden kann, ist es möglich, dass durch Energierückgewinnung der Energieinhalt der elektrischen Energiespeicherinhalt kurzfristig erhöht wird. Dies ist insbesondere durch das Rückspeichern von Energie, welche aus dem Rückgewinnen von potentieller Energie erhalten wird, möglich. Potentielle Energie kann insbesondere durch das Befahren einer Gefällestrecke oder durch das Verzögern des Fahrzeugs zurückgewonnen werden.

Unter der Reisegeschwindigkeit eines Elektrofahrzeugs mit Range-Extender ist vorzugsweise eine Geschwindigkeit zu verstehen, wie diese im außerstädtischen Betrieb typischerweise erreichbar ist. Die Reisegeschwindigkeit liegt vorzugsweise in einem Bereich von 80 km/h bis 150 km/h vorzugsweise von 100 km/h bis 140 km/h und vorzugsweise im Wesentlichen bei 110 bis 120 km/h.

Unter dem Detektieren des Ladezustands der elektrischen Energiespeichereinrichtung ist vorzugsweise das indirekte oder bevorzugt das direkte Erfassen des Energieinhalts der elektrischen Energiespeichereinrichtung zu verstehen. Vorzugsweise wird dieser Ladezustand durch eine akkumulierte Messung der entnommenen und zugeführten Energie der elektrischen Energiespeichereinrichtung oder bevorzugt durch die Messung eines Stroms oder einer Spannung an dieser ermittelt. Vorzugsweise wird der ermittelte Energieinhalt auf die Gesamtkapazität der elektrischen Energiespeichereinrichtung bezogen und weist somit insbesondere einen Wertebereich von 0 bis 1 oder von 0 - 100 % auf.

Unter einem Schwellenwert für den Ladezustand ist vorzugsweise ein vorgebbarer Wert zu verstehen, welcher insbesondere zwischen dem unteren und dem oberen Grenzwert liegt. Vorzugsweise ist dieser Schwellenwert nicht als ein Sollwert zu verstehen, an welchen der Ladezustand mit einer in der Regel vorgebbaren Genauigkeit angepasst werden soll, sondern als Signal- oder Triggerwert, welcher ein bestimmtes Verhalten des erfindungsgemäßen Verfahrens auslöst. Vorzugsweise ist dieser Schwellenwert als ein, einem bestimmten Ladezustand der Energiespeichereinrichtung entsprechender Wert zu verstehen und vorzugsweise einem Wertebereich zwischen 0 und 1 bzw. 0 - 100 % entnommen. Vorzugsweise wird beim Erreichen des Schwellenwerts der Stromerzeugungs-Verbrennungsmotor und damit die Energieerzeugung mit dem elektromechanischen Energiewandler gestartet.

Unter dem Verlangsamen oder Stoppen der Verringerung des Ladezustandes während der Fahrt des Elektrofahrzeugs in der Ebene ist vorzugsweise zu verstehen, dass sich die Abnahme der gespeicherten Energie (Ladezustand) zwischen dem Schwellenwert für den Ladezustand und dem unteren Grenzwert wenigstens langsamer vollzieht, als zwischen dem oberen Grenzwert und diesem Schwellenwert. Vorzugsweise wird diese Verlangsamung dadurch erreicht, dass der Stromerzeugungs-Verbrennungsmotor mittels des elektromechanischen Energiewandlers wenigstens einen Teil der Energie erzeugt, welcher durch das Überwinden der Fahrtwiderstände verbraucht wird.

Durch die Möglichkeit zur aktiven Energieerzeugung mittels des Stromerzeugungs-Verbrennungsmotors wird insbesondere in vorteilhafter Weise die Reichweite des Elektrofahrzeugs verlängert. Dadurch, dass diese aktive Energieerzeugung insbesondere gestartet wird, bevor der untere Grenzwert des Ladezustandes erreicht ist, geht diese Reichweitenverlängerung vorzugsweise ohne Einbußen beim Überwinden der Fahrtwiderstände einher. Wird die aktive Energieerzeugung insbesondere erst mit dem Erreichen des unteren Grenzwerts gestartet, so kann der elektrische Antriebsmotor nur mehr mit der aktiv erzeugten elektrischen Energie versorgt werden. Da der Stromerzeugungs-Verbrennungsmotor bezüglich seiner Leistung vorzugsweise kleiner ist als der elektrische Antriebsmotor, können die Fahrtwiderstände fortan nur noch mit relativ geringer Leistung überwunden werden, d.h. insbesondere das Beschleunigungsvermögen verschlechtert sich, die Reisegeschwindigkeit reduziert sich und die Steigfähigkeit sinkt.

Durch das erfindungsgemäße Verfahren wird die aktive Stromerzeugung vorzugsweise zu einem früheren Zeitpunkt, vorzugsweise beim Erreichen des Schwellenwerts für den Ladezustand, gestartet. Daraus folgt, dass der elektrische Antriebsmotor mit aktiv erzeugter und mit gespeicherter Energie aus dem elektrischen Energiespeicher versorgt werden kann. Durch das erfindungsgemäße Verfahren wird somit in vorteilhafter Weise insbesondere mit einer relativ kleinen und damit leichten elektrischen Energiespeichereinrichtung vorzugsweise eine große emissionsfreie Reichweite und darüber hinaus eine noch größere, mit geringen Emissionen behaftete, jedoch ohne Einbußen beim Überwinden der Fahrtwiderstände kombinierte, Reichweite ermöglicht.

Unter den Fahrstreckenanforderungen sind insbesondere Anforderungen der Fahrstrecke an den Energieverbrauch des Elektrofahrzeugs zu verstehen. Vorzugsweise sind unter den Fahrsteckenanforderungen Informationen zu Steigungs- und Gefällestrecken und/oder Informationen zu geplanten Fahrtgeschwindigkeit und/oder Informationen zur Fahrstreckenführung wie vorzugsweise Überlandfahrt oder Autobahnfahrt zu verstehen. Durch die Einbeziehung von Fahrstreckenanforderungen in die Steuerung des Elektrofahrzeugs wird ein verbessertes Verfahren zur Steuerung eines Elektrofahrzeugs erreicht.

Unter einem Range-Extender ist vorzugsweise eine Einrichtung zur Verlängerung der Reichweite eines Elektrofahrzeugs zu verstehen. Vorzugsweise weist ein Range-Extender eine Verbrennungskraftmaschine und einen elektromechanischen Energiewandler auf. Vorzugsweise ist der elektromechanische Energiewandler durch diese Verbrennungskraftmaschine antreibbar. Weiter vorzugsweise ist diese Verbrennungskraftmaschine als ein Hubkolben- oder besonders bevorzugt als ein Kreiskolben- beziehungsweise als ein Wankelmotor ausgeführt. Weiter vorzugsweise ist eine Abtriebswelle dieser Verbrennungskraftmaschine und eine Antriebswelle dieses elektromechanischen Energiewandlers koaxial zueinander angeordnet.

In einer bevorzugten Ausführungsform ist die Drehzahl des Stromerzeugungs-Verbrennungsmotors unabhängig von der Fahrgeschwindigkeit des Elektrofahrzeugs und wird durch das erfindungsgemäße Verfahren in einem Bereich geregelt, in welchen der Verbrennungsmotor mit einem hohen Wirkungsgrad arbeitet. Vorzugsweise wird die Drehzahl und/oder das Drehmoment des Stromerzeugungs-Verbrennungsmotors erfasst und in die Steuerung dieses Motors mit einbezogen. Vorzugsweise wird durch das erfindungsgemäße Verfahren die Drehmomentanforderung an den Stromerzeugungs-Verbrennungsmotor durch die Beeinflussung des Drehmoments des elektromechanischen Energiewandlers beeinflusst. Vorzugsweise wird das Drehmoment an der Abtriebswelle des Stromerzeugungs-Verbrennungsmotors auf mehr als die Hälfte, bevorzugt im Wesentlichen auf dreiviertel des Nenndrehmomentes dieses Stromerzeugungs-Verbrennungsmotors geregelt. Durch die Steuerung der Drehmomentanforderung und der Drehzahl des Stromerzeugungs-Verbrennungsmotors wird die elektrische Energie insbesondere mit einem hohen Wirkungsgrad erzeugt, damit wird ein verbesserter energieeffizienter Fahrzeugantrieb erreicht.

In einer bevorzugt Ausführungsform wird die aktiv erzeugte elektrische Energie, welche nicht direkt zum Antrieb des Elektrofahrzeugs verwendet wird, in der elektrischen Energiespeichereinrichtung gespeichert. Vorzugsweise wird das Drehmoment des elektromechanischen Energiewandlers und/oder die Drehzahl des Stromerzeugungs-Verbrennungsmotors so gesteuert, dass nur diejenige elektrische Energie erzeugt wird, welche durch den elektrischen Antriebsmotor im Wesentlichen augenblicklich verbraucht wird. Weiter vorzugsweise wird teilweise mehr elektrische Energie erzeugt, als der elektrische Antriebsmotor augenblicklich verbraucht, insbesondere wenn der Ladezustand näher am unteren Grenzwert als am Schwellenwert für den Ladezustand liegt und bevorzugt, wenn im Wesentlichen der untere Grenzwert erreicht ist. Somit wird insbesondere ein emissionsarmer, effizienter und damit verbesserter Betrieb eines Elektrofahrzeugs mit Range-Extender durch das erfindungsgemäße Verfahren gewährleistet

In einer bevorzugten Ausführungsform wird die Erzeugung elektrischer Energie durch den Verbrennungsmotor in Kombination mit dem elektromechanischen Energiewandler angehalten, wenn der Ladezustand des elektrischen Energiespeichers den oberen Grenzwert erreicht hat. Vorzugsweise wird zum Anhalten der Energieerzeugung der Stromerzeugungs-Verbrennungsmotor abgestellt, weiter vorzugsweise wird zum Anhalten der Energieerzeugung die Übertragung einer Drehzahl von der Abtriebswelle des Stromerzeugungs-Verbrennungsmotors auf die Eingangswelle des elektromechanischen Energiewandlers verhindert, insbesondere durch das Trennen einer diese beiden Wellen verbindenden Drehmoment-Übertragungseinrichtung, wie beispielsweise eine Kupplung oder ein Wandler. Vorzugsweise wird die Energieerzeugung in dem elektromechanischen Energiewandler dadurch angehalten, dass dessen Drehmoment an der Eingangswelle im Wesentlichen auf Null geregelt wird. Durch das Anhalten der Energieerzeugung beim Erreichen des oberen Grenzwerts wird insbesondere verhindert, dass die elektrische Energiespeichereinrichtung überladen und damit beschädigt wird, somit wird mit einem erfindungsgemäßen Verfahren ein verbesserter Betrieb eines Elektrofahrzeugs mit Range-Extender gewährleistet.

In einer bevorzugten Ausführungsform wird insbesondere der Antriebsstrang eines Elektrofahrzeugs mit Range-Extender in einen Notmodus geschalten, wenn vorzugsweise der untere Grenzwert des Ladezustands erreicht ist. Unter einem Notmodus ist dabei zu verstehen, dass aus dem elektrischen Energiespeicher keine weitere Energie entnommen wird. Insbesondere steht in diesem Notmodus nur mehr die aktiv vom Stromerzeugungs-Verbrennungsmotor mit dem elektromechanischen Energiewandler erzeugte Energie zur Verfügung. Weiter vorzugsweise werden elektrische Energieverbraucher, welche nicht unmittelbar dem Antrieb des Elektrofahrzeugs dienen, abgeschaltet oder in einen Energiesparmodus versetzt. Vorzugsweise kann aus dem elektrischen Energiespeicher alle darin noch enthaltene Energie entnommen werden, wenn eine Leistungsanforderung an den Antrieb des Elektrofahrzeugs gestellt wird, wie diese für eine Notfallsituation typisch ist. Eine solche Notfallsituation wird insbesondere durch ein besonders schnelles Betätigen des Beschleunigungswahlschalters, z.B. eine Pedal oder Joystick und/oder durch betätigen dieses Beschleunigungswahlschalters im Wesentlichen bis zu dessen Endanschlagsposition, maximale Beschleunigung, erkannt. Durch das Verhindern einer Tiefentladung der elektrischen Energiespeichereinrichtung durch das erfindungsgemäße Verfahren mittels eines Notmodus, jedoch mit der Möglichkeit, diesen zu "Overrulen", wird insbesondere einerseits die elektrische Energiespeichereinrichtung geschont und andererseits die Fahrzeugsicherheit erhöht und somit ein verbessertes Antriebssystem erreicht.

In einer weiter bevorzugten Ausführungsform wird in diesem Notmodus die mit dem Elektrofahrzeug erreichbare Geschwindigkeit begrenzt. Vorzugsweise wird diese Geschwindigkeit so begrenzt, dass die Leistung des Stromerzeugungs-Verbrennungsmotors größer ist als die Summe der zum Überwinden der Fahrtwiderstände notwendige Leistung, wobei damit vorzugsweise die Fahrtwiderstände bei der Fahrt in der Ebne mit konstanter Geschwindigkeit gemeint sind. Weiter vorzugsweise werden auch Fahrtwiderstände aus der Beschleunigung und dem Befahren einer Steigungs- beziehungsweise Gefällestrecke mit in die Betrachtung einbezogen. Vorzugsweise wird der Stromerzeugungs-Verbrennungsmotor in diesem Notmodus mit maximaler Leistung, wenigstens kurzfristig, bevorzugt ohne Berücksichtigung seines Wirkungsgrades, betrieben. Insbesondere durch das Reduzieren der Fahrtwiderstände auf ein Maß, dass mit dem Stromerzeugungs-Verbrennungsmotor in Verbindung mit dem elektromechanischen Energiewandler elektrische Energie zum Speichern in der elektrischen Energiespeichereinrichtung erzeugt wird, verbessert sich die Fahrbarkeit des Elektrofahrzeugs mit Range-Extender. Nach kurzer Zeit kann, insbesondere aufgrund der im Notmodus gespeicherten Energie, dieser wieder aufgehoben werden, somit wird mit dem erfindungsgemäßen Verfahren ein verbessertes Antriebssystem für Elektrofahrzeuge mit Range-Extender erreicht.

In einer bevorzugten Ausführungsform wird der obere Grenzwert für den Ladezustand des elektrischen Energiespeichers in einem Bereich von 50 % bis 100 %, bevorzugt von 80 % bis 100 % und besonders bevorzugt bei im Wesentlichen 95 % gewählt.
In einer bevorzugten Ausführungsform wird der untere Grenzwert für den Ladezustand des elektrischen Energiespeichers in einem Bereich von 5 % bis 50 %, bevorzugt von 10 % bis 35 % und besonders bevorzugt bei im Wesentlichen 20 % gewählt. Dabei wird der untere Grenzwert für den Ladezustand gerade so gewählt, dass einen Schädigung der elektrischen Energiespeichereinrichtung durch Tiefentladung verhindert wird. Durch die effiziente Nutzung der theoretisch möglichen Kapazität durch das erfindungsgemäße Verfahren wird die Effizienz des Elektrofahrzeugs gesteigert und damit ein verbessertes Antriebssystem bereitgestellt.

In einer bevorzugten Ausführungsform wird der Schwellenwert für den Ladezustand vorzugsweise so gewählt, dass dieser unterhalb der halben theoretisch Kapazität der elektrischen Energiespeichereinrichtung und oberhalb des unteren Grenzwerts dieser liegt. Vorzugsweise liegt dieser Schwellenwert näher am unteren Grenzwert als an der halben Kapazität. Vorzugsweise unterscheidet sich dieser Schwellenwert von dem Betriebspunkt, an welchem die elektrische Energiespeichereinrichtung am effizientesten zu betreiben ist. Vorzugsweise wird für die Wahl des Schwellenwertes für den Ladezustand die Betrachtung der Fahrtwiderstände des Elektrofahrzeugs herangezogen. Durch die Wahl dieses Schwellenwerts als Signal- oder Triggerwert nahe des unteren Grenzwertes ist insbesondere eine effiziente Nutzung des Antriebssystems durch das erfindungsgemäße Verfahren gewährleistet dieses stellt somit eine Verbesserung des Antriebssystems dar.

In einer bevorzugten Ausführungsform weist das Verfahren zum Betrieb eines Elektrofahrzeugs wenigstens zwei Betriebsmodi auf. Vorzugsweise ist ein erster Betriebsmodus ein Auflademodus und ein zweiter Betriebsmodus ein Boost-Modus. In diesem ersten Betriebsmodus wird vorzugsweise die Energiespeichereinrichtung mit elektrischer Energie versorgt und somit deren Ladezustand erhöht. Vorzugsweise wird die Energie zur Aufladung der Energiespeichereinrichtung vom elektromechanischen Energiewandler erzeugt und/oder vom elektrischen Antriebsmotor.

Ein Boost-Modus ist dagegen dazu vorgesehen, insbesondere kurzfristige auftretende Fahrtwiderstände, wie diese insbesondere bei einer starke Beschleunigung und/oder beim Befahren einer starken Steigungsstrecke auftreten, zu überwinden. Vorzugsweise wird in diesem zweiten Betriebsmodus Energie aus der Energiespeichereinrichtung ausgespeichert und/oder durch den elektromechanischen Energiewandler erzeugt. Vorzugsweise wird der elektrische Antriebsmotor mit dieser Energie versorgt. Durch ein Verfahren zum Steuern eines Elektrofahrzeugs mit wenigstens diesen zwei Betriebsmodi wird ein verbessertes Verfahren zur Steuerung eines Elektrofahrzeugs erreicht.

In einer bevorzugten Ausführungsform steuert ein erfindungsgemäßes Verfahren den Antrieb eines Elektrofahrzeugs und ist weiter vorzugsweise in einem oder mehreren Steuergeräten dieses Elektrofahrzeugs speicher- und oder ausführbar.

Weitere Merkmale, Vorteile und Ausführungsformen der vorliegenden Erfindung ergeben sich aus der folgenden Beschreibung der beigefügten Figuren.

Dabei zeigen:
- Fig.1:: den Verlauf einer idealisierten Entladung eines Elektrofahrzeugs mit Range-Extender mit/ohne erfindungsgemäßen Verfahren zur Steuerung des Antriebs,
- Fig.2:: den Leistungsbedarf eines Elektrofahrzeugs mit Range-Extender in der Ebene und auf einer Steigungsstrecke.

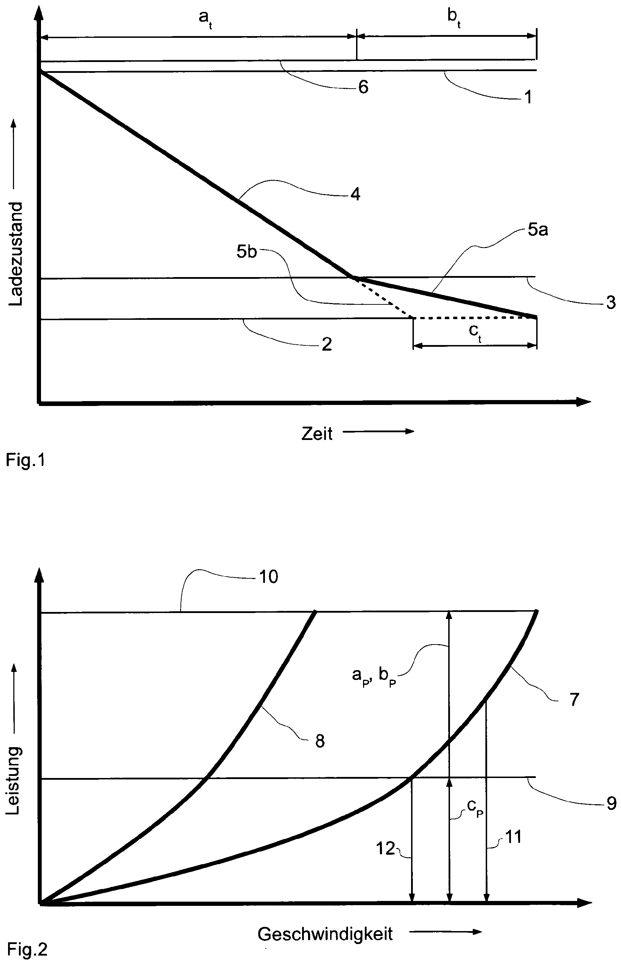

Figur 1 zeigt näherungsweise die Entladung der elektrischen Energiespeichereinrichtung eines Elektrofahrzeugs mit Range-Extender, wenn dieses Fahrzeug in der Ebene mit konstanter Geschwindigkeit bewegt wird. Die Entladung wird dabei durch die Gerade 4 dargestellt. Bei der Fahrt des gleichen Elektrofahrzeugs, jedoch nicht in der Ebene und/oder mit wechselnder Geschwindigkeit, kann sich eine andere Entladungscharakteristik einstellen, diese ändert jedoch nichts an den grundsätzlichen Zusammenhängen des erfindungsgemäßen Verfahrens zum Steuern des Antriebsstrangs.

Die theoretische Kapazität der elektrischen Energiespeichereinrichtung wird durch die Gerade 6 dargestellt. Um Beschädigungen der elektrischen Energiespeichereinrichtung zu verhindern, wird diese nicht bis zu dieser theoretischen Kapazität 6 aufgeladen, sondern nur bis zum oberen Grenzwert 1, dieser liegt vorzugsweise nahe an der theoretisch möglichen Kapazität 6, da nur so eine optimale Nutzung einer Energiespeichereinrichtung in einem Elektrofahrzeug erreichbar ist. Heute übliche Energiespeichereinrichtungen könne aus technischen Gründen nicht vollständig entladen werden, häufig nehmen solche Energiespeichereinrichtungen durch eine sogenannte Tiefentladung dauerhaft Schaden, der minimale Ladezustand wird daher durch den unteren Grenzwert 3 begrenzt.

Ein Elektrofahrzeug mit Range-Extender zeichnet sich insbesondere durch die mit einem solchen Fahrzeug erreichbare große emissionsfreie Reichweite aus, im Bereich aₜ bewegt sich das Elektrofahrzeug mit erfindungsgemäß Steuerungsverfahren emissionsfrei. Sinkt der Ladezustand auf den mit 3 gekennzeichneten Schwellenwert für den Ladezustand ab, so wird der Stromerzeugungs-Verbrennungsmotor gestartet und der elektromechanische Energiewandler zur Stromerzeugung herangezogen. Im Bereich bₜ liegt also kein emissionsfreier Betrieb des Elektrofahrzeugs mit Range-Extender vor. Durch die Energie, welche vom Stromerzeugungs-Verbrennungsmotor mit dem elektromechanischen Energiewandler aktiv erzeugt wird, verlangsamt sich nunmehr die Entlandung der elektrischen Energiespeichereinrichtung und die Gerade 4 geht dementsprechend in die Gerade 5a über.

Bezogen auf die Zeit ergibt sich also für die Gerade 5a ein flacherer Gradient als für die Gerade 4, vorausgesetzt, die Leistungsanforderung aus den zu überwindenden Fahrtwiderständen ist größer als die durch den Stromerzeugungs-Verbrennungsmotor erzeugbare Leistung. Ebenso wie die Gerade 4, stellt auch die Gerade 5a eine Idealisierung dar. Bei einem Elektrofahrzeug mit Range-Extender, welches nicht nach einem erfindungsgemäßen Verfahren gesteuert wird, tritt keine Verlangsamung der Entladung der Energiespeichereinrichtung nach Erreichen des Schwellenwerts für den Ladezustand 3 ein, die Entladung schreitet unvermindert fort, dieses Verhalten ist durch die Gerade 5b dargestellt. Bei einem herkömmlichen Steuerungsverfahren wird der Stromerzeugungs-Verbrennungsmotor erst bei Erreichen des unteren Grenzwertes 2 gestartet. Die emissonsbehaftete Fahrstrecke verkürzt sich demnach gegenüber einem erfindungsgemäßen Steuerungsverfahren von bₜ auf cₜ.

In Figur 2 ist die Leistungsanforderung an ein Elektrofahrzeug mit Range-Extender über der Fahrtgeschwindigkeit dargestellt. Im Elektrofahrzeug mit Range-Extender ist ein elektrischer Antriebsmotor mit der Leistung 10 installiert. Der Stromerzeugungs-Verbrennungsmotor ist in Verbindung mit dem elektromechanischen Energiewandler in der Lage, die elektrische Leistung 9 aktiv zu erzeugen. Die Kurve 7 repräsentiert in Fig.2 die Leistungsanforderung bei der Fahrt in der Ebene, die Kurve 8 die Leistungsanforderung bei der Fahrt auf einer Steigungsstrecke. Die Reisegeschwindigkeit des Elektrofahrzeugs stellt vorzugsweise eine bei der Auslegung des Elektrofahrzeugs zu berücksichtigende Größe dar, diese ist mit 11 gekennzeichnet.

Bei einem Elektrofahrzeug ohne erfindungsgemäßem Steuerungsverfahren steht nach dem Erreichen des unteren Grenzwerts 2 (nicht dargestellt) nur mehr die von Stromerzeugungs-Verbrennungsmotor in Verbindung mit dem elektromechanischen Energiewandler erzeugt elektrische Leistung 9 zum Fahrzeugantrieb zur Verfügung. Das Elektrofahrzeug lässt sich in diesem Betriebszustand also nur mehr im Leistungsbereich c_{P} bewegen, d.h. die Reisegeschwindigkeit 11 kann nicht mehr gehalten/erreicht werden und bricht auf die mit dem Stromerzeugungs-Verbrennungsmotor erreichbare Geschwindigkeit 12 ein.

Bei einem erfindungsgemäßen Steuerungsverfahren wird bereits vor dem Erreichen des unteren Grenzwerts 2 (nicht dargestellt) der Stromerzeugungs-Verbrennungsmotor zur Energieerzeugung herangezogen. Das Elektrofahrzeug mit erfindungsgemäßem Steuerungsverfahren kann demnach, selbst bei diesem niedrigen Ladezustand, immer noch im Bereich a_{P}, b_{P} bewegt werden, daraus folgt, dass die Reisegeschwindigkeit 11 weiterhin gehalten oder erreicht werden kann. Die gleichen Zusammenhänge gelten in der Regel für Beschleunigungsvorgänge und Steigfähigkeit des Elektrofahrzeugs, diese können mittels des erfindungsgemäßen Steuerungsverfahrens mit der vollen Leistung des elektrischen Antriebsmotors durchgeführt werden. Das erfindungsgemäße Steuerungsverfahren gewährleistet somit, anders als ein herkömmliches Steuerungsverfahren, dass das Elektrofahrzeug mit Range-Extender im Wesentlich mit der vollen Leistung des elektrischen Antriebsmotors bewegt werden kann.

**Bezugszeichen:**

| | |
|---|---|
| 1 | oberer Grenzwert der Energiespeicherkapazität |
| 2 | unterer Grenzwert der Energiespeicherkapazität |
| 3 | Schwellenwert für den Ladezustand |
| 4 | Entladecharakteristik der Energiespeichereinrichtung |
| 5a | Entladecharakteristik mit aktiver Energieerzeugung |
| 5b | Entladecharakteristik ohne Energieerzeugung |
| 6 | theoretische Kapazität der Energiespeichereinrichtung |
| 7 | Leistungsanforderung in der Ebene |
| 8 | Leistungsanforderung auf einer Steigungsstrecke |
| 9 | Leistung der Stromerzeugungs-Verbrennungsmotors |
| 10 | Leistung des elektrischen Antriebsmotors |
| 11 | Reisegeschwindigkeit |
| 12 | erreichbare Geschwindigkeit mit dem Stromerzeugungs-Verbrennungsmotor |
| aₜ | volle Leistung aus der Energiespeichereinrichtung gespeist |
| a_{P} | Bereich voller Leistung aus der Energiespeichereinrichtung |
| bₜ | volle Leistung aus der Energiespeichereinrichtung und vom Stromerzeugungs-Verbrennungsmotor gespeist |
| b_{P} | Bereich voller Leistung aus der Energiespeichereinrichtung und vom Stromerzeugungs-Verbrennungsmotor |
| cₜ | verminderte Leistung vom Stromerzeugungs-Verbrennungsmotor gespeist |
| c_{P} | Bereich verminderter Leistung vom Stromerzeugungs-Verbrennungsmotor |

## Patentansprüche

1. Verfahren zum Betrieb eines Elektrofahrzeugs mit Range-Extender, wobei dieses Elektrofahrzeug
- einen elektrischen Antriebsmotor,
- einen Stromerzeugungs-Verbrennungsmotor,
- einen elektromechanischen Energiewandler und
- eine elektrische Energiespeichereinrichtung
aufweist,
wobei der Stromerzeugungs-Verbrennungsmotor dazu vorgesehen ist, den elektromechanischen Energiewandler zur Erzeugung elektrischer Energie anzutreiben, und,
wobei der elektrische Antriebsmotor das Elektrofahrzeug antreibt,
wobei der Ladezustand des elektrischen Energiespeichers zwischen einem unteren und einem oberen Grenzwert liegt und sich bei Bewegung des Elektrofahrzeugs in der Ebene mit konstanter Reisegeschwindigkeit im Wesentlichen stetig verringert,
wobei der tatsächliche Ladezustand der elektrischen Energiespeichereinrichtung detektiert wird und dieser mit einem Schwellenwert für den Ladezustand (3) verglichen wird, wobei dieser Schwellenwert (3) oberhalb des unteren Grenzwertes (2) liegt,
und der Stromerzeugungs-Verbrennungsmotor zur Erzeugung elektrischer Energie herangezogen wird, wenn der detektierte Ladezustand (3) diesen Schwellenwert (3) erreicht beziehungsweise unterschreitet,
**dadurch gekennzeichnet, dass**
durch diese Energieerzeugung die Verringerung des Ladezustandes (3) verlangsamt wird und der Schwellenwert für den Ladezustand (3) unterhalb der halben Kapazität des elektrischen Energiespeichers (6), näher am unteren Grenzwert (2) als an dieser halben Kapazität, liegt.

2. Verfahren zum Betrieb eines Elektrofahrzeugs nach Anspruch 1, **dadurch gekennzeichnet, dass**
die Drehzahl des Verbrennungsmotors zur Energieerzeugung im Wesentlichen unabhängig von der Fahrzeuggeschwindigkeit geregelt und dieser in einem Betriebsbereich mit hohem Wirkungsgrad betrieben wird.

3. Verfahren zum Betrieb eines Elektrofahrzeugs nach einem der vorhergehenden Ansprüche, **dadurch gekennzeichnet, dass**
elektrische Energie, welche vom Stromerzeugungs-Verbrennungsmotor mit dem elektromechanischen Energiewandler erzeugt wird und nicht zum Antrieb des Elektrofahrzeugs verbraucht wird, in der elektrischen Energiespeichereinrichtung eingespeichert wird.

4. Verfahren zum Betrieb eines Elektrofahrzeugs nach einem der vorhergehenden Ansprüche, **dadurch gekennzeichnet, dass**
die Energieerzeugung durch den Stromerzeugungs-Verbrennungsmotor in Verbindung mit dem elektromechanischen Energiewandler angehalten wird, wenn der Ladezustand (3) des elektrischen Energiespeichers den oberen Grenzwert (1) erreicht.

5. Verfahren zum Betrieb eines Elektrofahrzeugs nach einem der vorhergehenden Ansprüche, **dadurch gekennzeichnet, dass**
das Elektrofahrzeug in einen Notmodus geschaltet wird, wenn der Ladezustand (3) des elektrischen Energiespeichers den unteren Grenzwert erreicht.

6. Verfahren zum Betrieb eines Elektrofahrzeugs nach Anspruch 5, **dadurch gekennzeichnet, dass**
in diesem Notmodus der Energieverbrauch des Fahrzeugs durch:
- Abschalten von Nebenverbrauchern und/oder
- Reduzieren der Maximalgeschwindigkeit
verringert wird,
dass dieser Notmodus einem Fahrzeugführer anzeigbar ist.

7. Verfahren zum Betrieb eines Elektrofahrzeugs nach einem der vorhergehenden Ansprüche, **dadurch gekennzeichnet, dass**
der obere Grenzwert des Ladezustands (1) im Wesentlichen in einem Bereich von 50 % bis 100 %, bevorzugt von 80 % bis 100 % und besonders bevorzugt im Wesentlichen bei 95 % der Kapazität des elektrischen Energiespeichers (6) liegt.

8. Verfahren zum Betrieb eines Elektrofahrzeugs nach einem der vorhergehenden Ansprüche, **dadurch gekennzeichnet, dass**
der untere Grenzwert des Ladezustandes (2) im Wesentlichen in einem Bereich zwischen 5 % und 50 % vorzugsweise zwischen 10 % und 35 % und besonders bevorzugt bei im Wesentlichen bei 20 %, bezogen auf die Kapazität des elektrischen Energiespeichers (6), liegt.

9. Verfahren zum Betrieb eines Elektrofahrzeugs nach einem der vorhergehenden Ansprüche, **dadurch gekennzeichnet, dass**
in diesem Verfahren wenigstens ein erster Betriebsmodus zum Aufladen der Energiespeichereinrichtung vorgesehen ist, in welchem die Energiespeichereinrichtung mit elektrischer Energie aufgeladen wird
und wenigstens ein zweiter Betriebsmodus zum Überwinden von Fahrtwiderständen vorgesehen ist, in welchem Energie aus der Energiespeichereinrichtung ausgespeichert wird und Energie durch den elektromechanischen Energiewandler erzeugt wird und der elektrische Antriebsmotor mit der Energie aus der Energiespeichereinrichtung und vom elektromechanischen Energiewandler versorgt wird.

10. Verfahren zum Betrieb eines Elektrofahrzeugs nach einem der vorhergehenden Ansprüche, **dadurch gekennzeichnet, dass**
der Schwellenwert (3) für den Ladezustand von Fahrsteckenanforderungen abhängig ist, wobei die Fahrstreckenanforderungen durch den Benutzer vorgebbar sind, und/oder aus dem aktuellen Fahrzustand des Elektrofahrzeugs ableitbar sind und/oder aus Informationen des Navigationssystems ableitbar sind.

11. Range-Extender zum Einsatz in einem Elektrofahrzeug, wobei der Range-Extender wenigstens eine Verbrennungskraftmaschine und wenigstens einen elektromechanischen Energiewandler aufweist, **dadurch gekennzeichnet, dass** der Range-Extender dazu ausgelegt ist, elektrische Leistung zum Antrieb für ein Elektrofahrzeug abzugeben und nach einem Verfahren nach einem der Ansprüche 1 bis 10 gesteuert wird.

12. Range-Extender nach Anspruch 11, **dadurch gekennzeichnet, dass** die Verbrennungskraftmaschine als ein Kreiskolbenmotor ausgeführt ist und dass eine Abtriebswelle dieses Kreiskolbenmotors und eine Antriebswelle des elektromechanischen Energiewandlers im Wesentlichen koaxial zueinander ausgerichtet sind.

13. Elektrofahrzeug welches einen Range-Extender nach einem der Ansprüche 11 oder 12 aufweist.

## Claims

1. Method for operating an electric vehicle with a range extender, whereby this electric vehicle comprises
- an electric propulsion motor,
- an electricity generating propulsion motor,
- an electromechanical energy converter and
- an electrical energy storage device,
whereby the electricity generating propulsion motor is intended to drive the electromechanical energy converter for generating electrical energy, and, whereby the electric propulsion motor drives the electric vehicle,
whereby the state of charge of the electrical energy storage is located between a lower and an upper threshold value and is substantially continuously reduced by movement of the electric vehicle in the plain with constant travelling velocity, whereby the actual state of charge of the electrical energy storage device is detected and this state of charge is compared with a threshold value for the state of charge (3), whereby this threshold value (3) lies above the lower threshold value (2),
and the electricity generating propulsion motor for generating electrical energy is used, if the detected state of charge (3) reaches or rather falls below this threshold value (3),
**characterised in that**
the decrease of the state of charge (3) is reduced by this energy generation and the threshold for the state of charge (3) lies below of the half capacity of the electrical energy storage (6), closer to the lower threshold value (2) compared to this half capacity.

2. Method for operating an electric vehicle according to claim 1,
**characterised in that**
the speed of the propulsion engine for generating energy is controlled substantially independently from the vehicle velocity and this propulsion engine is operated in an operation range of high efficiency.

3. Method for operating an electric vehicle according to one of the previous claims,
**characterised in that**
electrical energy, which is generated by the electricity generating propulsion motor with the electromechanical energy converter and is not used for driving the electric vehicle, is stored in the electrical energy storage device.

4. Method for operating an electric vehicle according to one of the previous claims,
**characterised in that**
the generation of energy by the electricity generating propulsion motor in combination with the electromechanical energy converter is stopped, if the state of charge (3) of the electrical energy storage reaches the upper threshold value (1).

5. Method for operating an electric vehicle according to one of the previous claims,
**characterised in that**
the electric vehicle is switched into a necessity mode, if the state of charge (3) of the electrical energy storage reaches the lower threshold value.

6. Method for operating an electric vehicle according to claim 5,
**characterised in that**
in this necessity mode the energy consumption of the vehicle is reduced by:
- switching off auxiliary users and/or
- reducing the maximum velocity,
that this necessity mode is displayable to a vehicle driver.

7. Method for operating an electric vehicle according to one of the previous claims,
**characterised in that**
the upper threshold value of the state of charge (1) lies substantially within a range from 50 % to 100 %, preferred from 80 % to 100 % and particularly preferred substantially at 95 % of the electrical energy storage (6) capacity.

8. Method for operating an electric vehicle according to one of the previous claims,
**characterised in that**
the lower threshold value of the state of charge (2) lies substantially within a range between 5 % and 50 % preferably between 10 % and 35 % and particularly preferred at substantially 20 %, related to the capacity of the electrical energy storage (6).

9. Method for operating an electric vehicle according to one of the previous claims,
**characterised in that**
in this method at least one first operating mode, in which the energy storage device is charged with electrical energy, for charging the energy storage device is provided
and at least one second operating mode for overcoming driving resistances is provided, in which energy from the energy storage device is outputted and energy is generated by the electromechanical energy converter and the electrical propulsion engine is supplied with energy from the energy storage device and from the electromechanical energy converter.

10. Method for operating an electric vehicle according to one of the previous claims,
**characterised in that**
the threshold value (3) for the state of charge is dependent of driving route requirements, whereby the driving route requirements can be predefined by the user, and/or can be derived from the present driving status of the electric vehicle and/or information from the navigation system.

11. Range extender for use in an electric vehicle, whereby the range extender comprises at least an internal combustion engine and at least an electromechanical energy converter,
**characterised in that**
the range extender is designed to render electrical power for propulsion of an electric vehicle and is controlled by a method according to one of the claims 1 to 10.

12. Range extender according to claim 11,
**characterised in that**
the internal combustion engine is built as a rotary piston engine and that a pinion shaft of this rotary piston engine and a driving shaft of the electromechanical energy converter are aligned substantially coaxially to one another.

13. Electric vehicle, which comprises a range extender according to one of the claims 11 or 12.

## Revendications

1. Procédé pour faire fonctionner un véhicule électrique avec prolongateur d'autonomie, dans lequel ce véhicule électrique présente
- un moteur d'entraînement électrique,
- un moteur à combustion de génération d'électricité,
- un convertisseur d'énergie électromécanique et
- un dispositif d'accumulation d'énergie électrique,
dans lequel le moteur à combustion de génération d'électricité est prévu pour entraîner le convertisseur d'énergie électromécanique pour la génération d'énergie électrique, et,
dans lequel le moteur d'entraînement électrique entraîne le véhicule électrique,
dans lequel l'état de charge de l'accumulateur d'énergie électrique se situe entre une valeur limite inférieure et une valeur limite supérieure et diminue sensiblement en continu lors du déplacement du véhicule électrique dans le plan à vitesse de déplacement constante,
dans lequel l'état de charge réel du dispositif d'accumulation d'énergie électrique est détecté et celui-ci est comparé avec une valeur de seuil pour l'état de charge (3), dans lequel cette valeur de seuil (3) est supérieure à la valeur limite inférieure (2),
et le moteur à combustion de génération d'électricité est utilisé pour la génération d'énergie électrique, lorsque l'état de charge détecté (3) atteint ou devient inférieur à cette valeur de seuil (3),
**caractérisé en ce que**
par cette génération d'énergie, la diminution de l'état de charge (3) est ralentie et la valeur de seuil pour l'état de charge (3) se trouve sous la demi-capacité du dispositif d'accumulation d'énergie électrique (6), plus proche de la valeur limite inférieure (2) que de cette demi-capacité.

2. Procédé pour faire fonctionner un véhicule électrique selon la revendication 1, **caractérisé en ce que**
la vitesse de rotation du moteur à combustion de génération d'électricité est réglée sensiblement indépendamment de la vitesse du véhicule et celui-ci fonctionne dans une plage de fonctionnement à haut rendement.

3. Procédé pour faire fonctionner un véhicule électrique selon l'une quelconque des revendications précédentes, **caractérisé en ce que**
l'énergie électrique, laquelle est générée par le moteur à combustion de génération d'électricité avec le convertisseur d'énergie électromécanique et qui n'est pas consommée pour l'entraînement du véhicule électrique, est stockée dans le dispositif d'accumulation d'énergie électrique.

4. Procédé pour faire fonctionner un véhicule électrique selon l'une quelconque des revendications précédentes, **caractérisé en ce que**
la génération d'énergie par le moteur à combustion de génération d'électricité est arrêtée en relation avec le convertisseur d'énergie électromécanique, lorsque l'état de charge (3) de l'accumulateur d'énergie électrique atteint la valeur limite supérieure (1).

5. Procédé pour faire fonctionner un véhicule électrique selon l'une quelconque des revendications précédentes, **caractérisé en ce que**
le véhicule électrique est commuté dans un mode d'urgence, lorsque l'état de charge (3) de l'accumulateur d'énergie électrique atteint la valeur limite inférieure.

6. Procédé pour faire fonctionner un véhicule électrique selon la revendication 5, **caractérisé en ce que**
dans ce mode d'urgence, la consommation d'énergie du véhicule est réduite par :
- coupure des consommateurs auxiliaires et/ou
- réduction de la vitesse maximum,
que ce mode d'urgence peut être affiché à un conducteur de véhicule.

7. Procédé pour faire fonctionner un véhicule électrique selon l'une quelconque des revendications précédentes, **caractérisé en ce que**
la valeur limite supérieure de l'état de charge (1) est sensiblement dans une plage de 50 % à 100 %, de préférence de 80 % à 100 % et de manière particulièrement préférée sensiblement de 95 % de la capacité de l'accumulateur d'énergie électrique (6).

8. Procédé pour faire fonctionner un véhicule électrique selon l'une quelconque des revendications précédentes, **caractérisé en ce que**
la valeur limite inférieure de l'état de charge (2) est sensiblement dans une plage entre 5 % et 50 % de préférence entre 10 % et 35 % et de manière particulièrement préférée sensiblement de 20 % par rapport à la capacité de l'accumulateur d'énergie électrique (6).

9. Procédé pour faire fonctionner un véhicule électrique selon l'une quelconque des revendications précédentes, **caractérisé en ce que**
dans ce procédé, au moins un premier mode de fonctionnement est prévu pour charger le dispositif d'accumulation d'énergie, dans lequel le dispositif d'accumulation d'énergie est chargé en énergie électrique
et au moins un deuxième mode de fonctionnement est prévu pour vaincre les résistances au roulement, dans lequel l'énergie est déchargée du dispositif d'accumulation d'énergie et l'énergie est générée par le convertisseur d'énergie électromécanique et le moteur d'entraînement électrique est alimenté en énergie du dispositif d'accumulation d'énergie et du convertisseur d'énergie électromécanique.

10. Procédé pour faire fonctionner un véhicule électrique selon l'une quelconque des revendications précédentes, **caractérisé en ce que**
la valeur de seuil (3) pour l'état de charge dépend des exigences du parcours, dans lequel les exigences du parcours peuvent être prédéfinies par l'utilisateur, et/ou sont déductibles de l'état de marche actuel du véhicule électrique et/ou sont déductibles des informations du système de navigation.

11. Prolongateur d'autonomie à utiliser dans un véhicule électrique, dans lequel le prolongateur d'autonomie présente au moins un moteur à combustion interne et au moins un convertisseur d'énergie électromécanique, **caractérisé en ce que** le prolongateur d'autonomie est conçu pour fournir une puissance électrique pour l'entraînement d'un véhicule électrique et commandé selon un procédé selon l'une quelconque des revendications 1 à 10.

12. Prolongateur d'autonomie selon la revendication 11, **caractérisé en ce que** le moteur à combustion interne est réalisé en tant que moteur à piston rotatif et qu'un arbre de sortie de ce moteur à piston rotatif et un arbre d'entraînement du convertisseur d'énergie électromécanique sont orientés de manière sensiblement coaxiale l'un à l'autre.

13. Véhicule électrique qui présente un prolongateur d'autonomie selon l'une quelconque des revendications 11 ou 12.
